# EUROPEAN PATENT APPLICATION

(11) **EP 1 162 547 A2**
(43) Date of publication of application: **12.12.2001**
(21) Application number: 01304855.8
(22) Date of filing: 01.06.2001
(51) Int. Cl.: G06F 17/14

(54) **In-Place Memory Management for FFT**

(30) Priority: 05.06.2000 US 586775
(71) Applicant: DSP Group Ltd., 46120 Herzlia (IL)
(72) Inventor: Vinitzky, Gil, Azur 58014 (IL)
(74) Representative: Flint, Adam

(57) **Abstract**

A method for in-place memory management in a Digital Signal Processing (DSP) architecture performing a Fast Fourier Transformation (FFT) upon a sequence of N data points, the sequence numbered from 0 to N-1, the method including storing each of the data points numbered from 0 to (N/2)-1 in a first memory space X and each of the data points numbered N/2 to N-1 in a second memory space Y, for each FFT stage 0 data point grouping including a first data point of the data points in the first memory space X and a corresponding second data point of the data points in the second memory space Y determining the parity of a data point memory index corresponding to the first and second data points, storing, if the parity is of a first parity value, the results of an FFT operation upon the first data point at the memory address in the first memory space X from which the first data point was fetched and the result of an FFT operation upon the second data point at the memory address in the second memory space Y from which the second data point was fetched, and storing, if the parity is of a second parity value, the results of an FFT operation upon the first data point at the memory address in the second memory space Y from which the second data point was fetched and the result of an FFT operation upon the second data point at the memory address in the first memory space X from which the first data point was fetched.

## Description

The present invention relates to Digital Signal Processing (DSP) in general, and more particularly to methods and apparatus for improved "in-place" memory management for Fast Fourier Transform (FFT) calculations.

A Digital Signal Processor (DSP) is a special-purpose computer that is designed to optimize digital signal processing tasks such as Fast Fourier Transformation (FFT), digital filtering, image processing, and speech recognition. DSP applications are typically characterized by real-time operation, high interrupt rates, and intensive numeric computations. In addition, DSP applications tend to be intensive in memory access operations and require the input and output of large quantities of data.

In DSP architectures that perform FFT calculations data are read from and written to memory in several stages. Some DSP architectures employ separate memory spaces for input data and output data. In order to reduce the amount of memory required for FFT, "in-place" memory management schemes have been developed whereby the FFT input data memory space is overwritten with the results of FFT calculations, thus eliminating the need for an additional memory space for storing the results at each stage of the FFT. Where a single memory space is used to store the FFT input data, two memory read cycles are generally needed to fetch the two data points (one data point comprises two data values, one real and one imaginary) required for each FFT multiplication operation. This may theoretically be reduced to one memory read cycle by using two memory spaces, each storing half of the FFT data points to be input, whereby one of the two data points is fetched from the first memory space at the same time the other data point is fetched from the second memory space. However, in order to ensure that every two FFT data points require only one memory read cycle throughout each stage of the FFT, the results of one stage of the FFT must be written in-place to the two memory spaces such that in the following stage each of the two data points in each data point grouping resides in a different memory space.

The following table labeled Table 1 illustrates the data point groupings required for each stage of a 16 data point FFT:

**TABLE 1**

| Stage 0 | Stage 1 | Stage 2 | Stage 3 |
|---|---|---|---|
| 0,8 | 0,4 | 0,2 | 0,1 |
| 1,9 | 1,5 | 1,3 | 2,3 |
| 2,10 | 2,6 | 4,6 | 4,5 |
| 3,11 | 3,7 | 5,7 | 6,7 |
| 4,12 | 8,12 | 8,10 | 8,9 |
| 5,13 | 9,13 | 9,11 | 10,11 |
| 6,14 | 10,14 | 12,14 | 12,13 |
| 7,15 | 11,15 | 13,15 | 14,15 |

Assuming that prior to stage 0 data points 0 - 7 reside in a first memory space X and data points 8 - 16 reside in a second memory space Y, each of the data point groupings in stage 0 will require only one memory read cycle to be fetched from memory, as each data point in each grouping resides in a separate memory space (e.g., data points 0 and 8 in data point grouping 0,8 reside in separate memory spaces X and Y). However, should the results of stage 0 be written in-place such that the results of an FFT calculation upon a data point are written to the location in the memory space from which the data point was fetched, each of the data point groupings in stages 1 - 3 will require two memory read cycles to be fetched from memory, as each data point in each grouping resides in the same memory space (e.g., both of data points 0 and 4 in data point grouping 0,4 in stage 1 resides in memory space X).

The present invention seeks to provide methods and apparatus for improved "in-place" memory management for Fast Fourier Transform (FFT) calculations that ensure that every two FFT data points require only one memory read cycle throughout each stage of the FFT.

There is thus provided in accordance with a preferred embodiment of the present invention a method for in-place memory management in a Digital Signal Processing (DSP) architecture performing a Fast Fourier Transformation (FFT) upon a sequence of N data points, the sequence numbered from 0 to N-1, the method including storing each of the data points numbered from 0 to (N/2)-1 in a first memory space X and each of the data points numbered N/2 to N-1 in a second memory space Y, for each FFT stage 0 data point grouping including a first data point of the data points in the first memory space X and a corresponding second data point of the data points in the second memory space Y determining the parity of a data point memory index corresponding to the first and second data points, storing, if the parity is of a first parity value, the results of an FFT operation upon the first data point at the memory address in the first memory space X from which the first data point was fetched and the result of an FFT operation upon the second data point at the memory address in the second memory space Y from which the second data point was fetched, and storing, if the parity is of a second parity value, the results of an FFT operation upon the first data point at the memory address in the second memory space Y from which the second data point was fetched and the result of an FFT operation upon the second data point at the memory address in the first memory space X from which the first data point was fetched.

Further in accordance with a preferred embodiment of the present invention the method further includes for any FFT stage Z subsequent to stage 0 and each FFT stage Z data point grouping including a first data point in the first memory space X and a corresponding second data point in the second memory space Y, storing the results of an FFT operation upon the first data point at the memory address in the first memory space X from which the first data point was fetched and the results of an FFT operation upon the second data point at the memory address in the second memory space Y from which the second data point was fetched.

It is appreciated throughout the specification and claims that the term "data point" refers to a pairing of two data values, a real value and an imaginary value.

It is also appreciated throughout the specification and claims that the term "data point memory index" refers to the minimum number of addressing bits needed to uniquely identify one data point from another within a single memory space.

The present invention will be understood and appreciated more fully from the following detailed description taken in conjunction with the appended drawings in which:
Fig. 1 is a simplified flowchart illustration of an improved in-place memory management for Fast Fourier Transform (FFT) calculations, operative in accordance with a preferred embodiment of the present invention;
Fig. 2 is a simplified tabular illustration of FFT input data memory spaces useful in understanding the method of Fig. 1, constructed and operative in accordance with a preferred embodiment of the present invention;
Fig. 3 is a simplified tabular illustration of a parity table of data point memory indices useful in understanding the method of Fig. 1, constructed and operative in accordance with a preferred embodiment of the present invention; and
Fig. 4 is a simplified tabular illustration of the memory spaces X and Y of Fig. 2 after FFT stage 0 results have been applied in-place in accordance with the method of Fig. 1, constructed and operative in accordance with a preferred embodiment of the present invention.

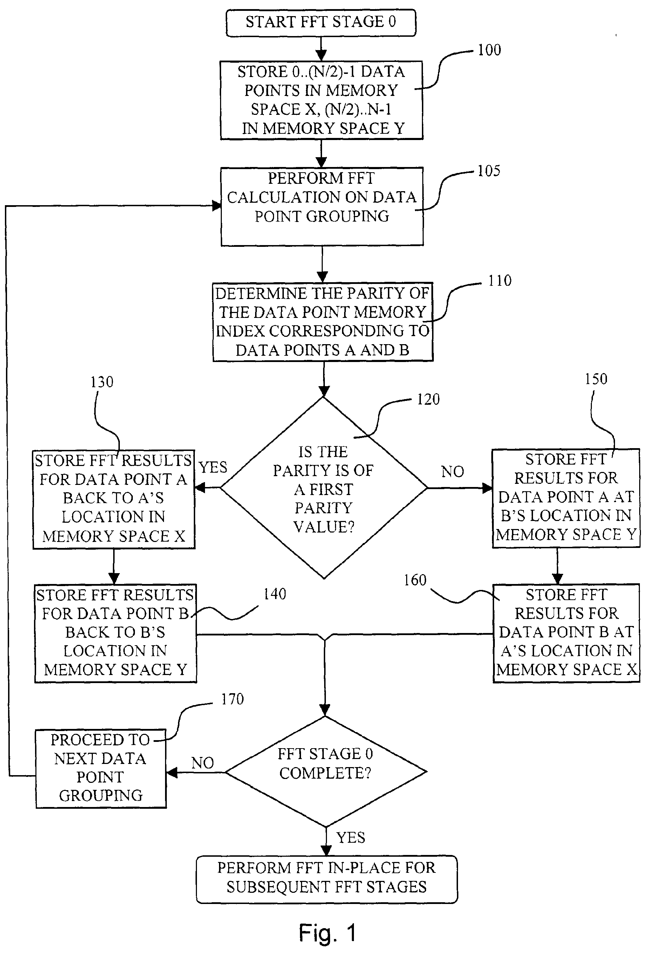

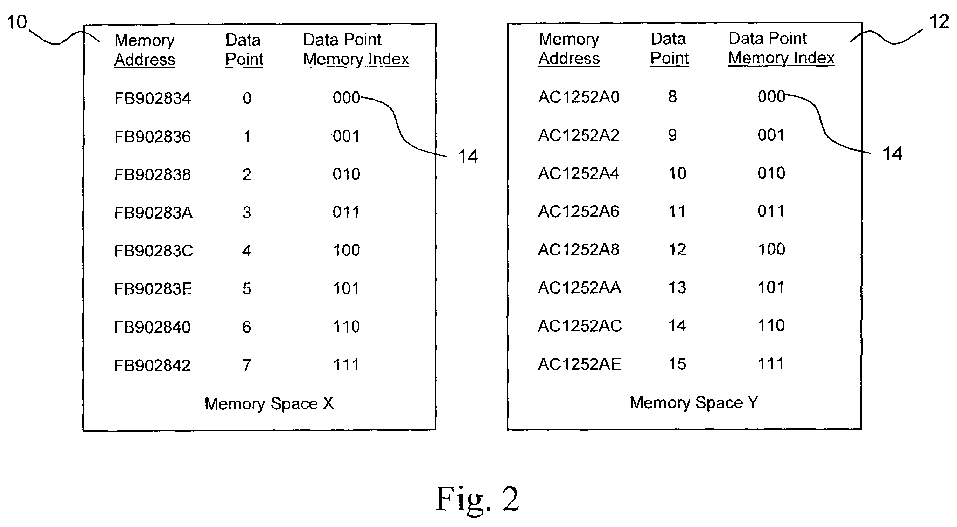

Reference is now made to Fig. I which is a simplified flowchart illustration of an improved in-place memory management for Fast Fourier Transform (FFT) calculations, operative in accordance with a preferred embodiment of the present invention, and Figs. 2, 3, and 4 which are simplified tabular illustrations useful in understanding the method of Fig. 1, constructed and operative in accordance with a preferred embodiment of the present invention. In the method of Fig. 1 a sequence of N data points numbered from 0 to N-1 is stored in two separate memory spaces, arbitrarily designated X and Y respectively, of a Digital Signal Processor that supports simultaneous fetching from both memory spaces within a single memory read cycle. Typically, each of the data points numbered from 0 to (N/2)-1 are stored in memory space X and each of the data points numbered N/2 through N-1 are stored in memory space Y (step 100).

The arrangement of the data points within memory spaces X and Y may be seen with particular reference to Fig. 2, which is a simplified tabular illustration of FFT input data memory spaces, constructed and operative in accordance with a preferred embodiment of the present invention. In Fig. 2 two memory spaces X and Y, generally designated 10 and 12 respectively, are shown storing 16 FFT data points numbered 0 - 15, with memory space X storing data points 0 - 7 and memory space Y storing data points 8 - 15. Although 16 data points are shown, it is appreciated that memory spaces X and Y may be used to store any number of data points N numbered from 0 - (N-1) where data points numbered 0 to (N/2)-1 are stored in memory space X and data points numbered N/2 through N-1 are stored in memory space Y.

A data point memory index 14 may be defined for each data point as the minimum number of addressing bits needed to uniquely identify one data point from another within a single memory space. Thus, where an FFT comprises 16 data points with data points 0 - 7 stored contiguously in memory space X and data points 8 - 15 stored contiguously in memory space Y, a data point memory index of three bits is required.

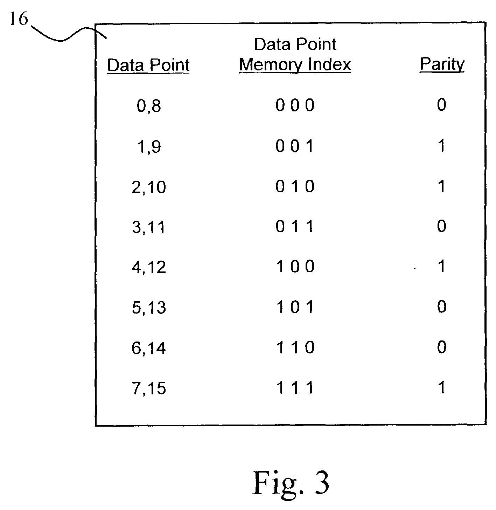

The method of Fig. 1 continues with FFT stage 0 calculations being performed for each data point grouping (A,B), such as is shown in Table 1 above (step 105). Prior to storing the results for a data point grouping (A,B) in memory spaces X and Y, the parity of the data point memory index corresponding to data points A and B is determined (step 110). The parity determination may be seen with particular reference to Fig. 3, which is a simplified tabular illustration of a parity table of data point memory indices, constructed and operative in accordance with a preferred embodiment of the present invention. In Fig. 3 a table 16 shows the parity of the data point memory index selected for each data point grouping (A,B) (Table 1, Stage 0).

Returning now to the method of Fig. 1, if the parity is of a first parity value (step 120) the results of an FFT operation upon the data point A are stored in memory space X at the memory address from which data point A was fetched (step 130), and the result of an FFT operation upon the data point B are stored in memory space Y at the memory address from which data point B was fetched (step 140). If the parity is of a second parity value the process is reversed, where the results of an FFT operation upon the data point A are stored in memory space Y at the memory address from which data point B was fetched (step 150), and the result of an FFT operation upon the data point B are stored in memory space X at the memory address from which data point A was fetched (step 160). It is appreciated that it is not important whether 0 is chosen for the first parity value and 1 for the second parity value or vice versa, as long as they are consistently applied throughout stage 0. Processing continues until all data pair groupings in FFT stage 0 have been processed (step 170).

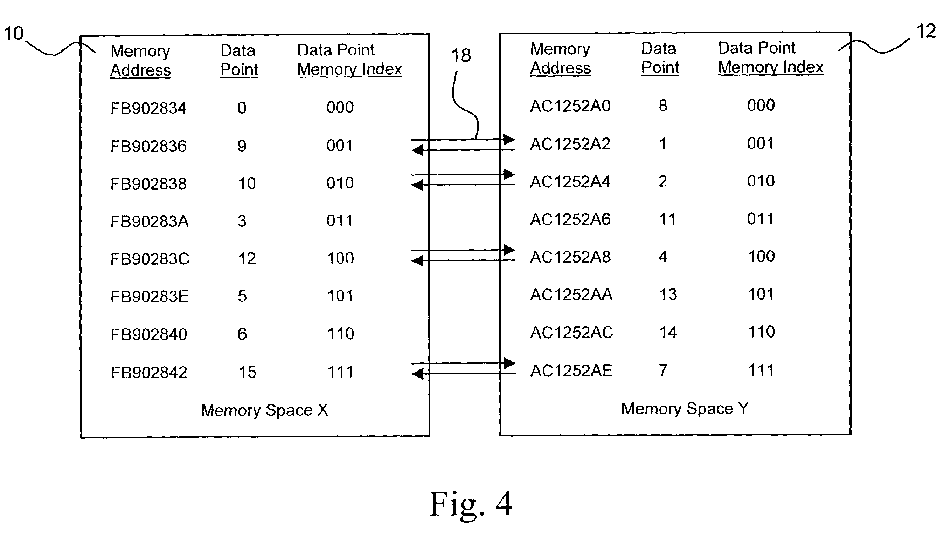

The storage of FFT stage 0 results may be seen with particular reference to Fig. 4, which is a simplified tabular illustration of the memory spaces X and Y of Fig. 2 after FFT stage 0 results have been applied in-place, constructed and operative in accordance with a preferred embodiment of the present invention. In Fig. 4 the results of FFT calculations upon each of the data points in the data point groupings shown hereinabove in Table 1 are stored in-place to the memory spaces according to the parity of the data point memory index corresponding to each data point selected for each data point grouping as shown in Fig. 3. In Fig. 4 a parity of 0 has been chosen for the first parity value, causing the FFT calculation result associated with a data point to be written in-place to the memory address from which the data point was fetched, while a parity of 1 has been chosen for the second parity value, causing the FFT calculation result associated with a data point to be written in-place to the memory address from which the other data point in the data point grouping was fetched. Thus, given a parity of 0 for data point 0 in Fig. 3, in Fig. 4 the FFT calculation result for data point 0 in memory space X is stored at the memory address in memory space X from which data point 0 was fetched, while the FFT calculation result for data point 8 in memory space Y is stored at the memory address in memory space Y corresponding to data point 8. Conversely, with a parity of 1 for data point 1 in Fig. 3, in Fig. 4 the FFT calculation result for data point 1 in memory space X is stored at the memory address in memory space Y from which data point 9 was fetched, while the FFT calculation result for data point 9 in memory space Y is stored at the memory address in memory space X from which data point 1 was fetched. The FFT calculation results for data point groupings (2,10), (4,12), and (7,15) are likewise swapped in accordance with their corresponding data point memory index parity value being 1, as indicated by arrows 18.

It may be seen with particular reference to Fig. 4 that the configuration of memory spaces X and Y after the method of Fig. 1 is applied during FFT stage 0 ensures that any two data points in any data point grouping in any stage of the FFT resides in a different memory space as long as, for any FFT stage Z subsequent to stage 0 and each FFT stage Z data point grouping comprising a data point in memory space X and a corresponding data point in memory space Y, the results of an FFT operation upon each of the data points are stored at the memory address in the memory space from which each data point was fetched. Thus, each of the data points in each of the data point groupings in Table 1 for stages 1 - 3 resides in a different memory space, enabling both data points to be fetched in a single memory read cycle and written in-place.

The methods and apparatus disclosed herein have been described without reference to specific hardware or software. Rather, the methods and apparatus have been described in a manner sufficient to enable persons of ordinary skill in the art to readily adapt commercially available hardware and software as may be needed to reduce any of the embodiments of the present invention to practice without undue experimentation and using conventional techniques.

While the present invention has been described with reference to a few specific embodiments, the description is intended to be illustrative of the invention as a whole and is not to be construed as limiting the invention to the embodiments shown. It is appreciated that various modifications may occur to those skilled in the art that, while not specifically shown herein, are nevertheless within the true spirit and scope of the invention.

## Claims

1. A method for in-place memory management in a Digital Signal Processing (DSP) architecture performing a Fast Fourier Transformation (FFT) upon a sequence of N data points, said sequence numbered from 0 to N-1, the method comprising:
storing each of said data points numbered from 0 to (N/2)-1 in a first memory space X and each of said data points numbered N/2 to N-1 in a second memory space Y;
for each FFT stage 0 data point grouping comprising a first data point of said data points in said first memory space X and a corresponding second data point of said data points in said second memory space Y:
determining the parity of a data point memory index corresponding to said first and second data points;
storing, if said parity is of a first parity value, the results of an FFT operation upon said first data point at the memory address in said first memory space X from which said first data point was fetched and the result of an FFT operation upon said second data point at the memory address in said second memory space Y from which said second data point was fetched; and
storing, if said parity is of a second parity value, the results of an FFT operation upon said first data point at the memory address in said second memory space Y from which said second data point was fetched and the result of an FFT operation upon said second data point at the memory address in said first memory space X from which said first data point was fetched.

2. A method according to claim 1 and further comprising:
for any FFT stage Z subsequent to stage 0 and each FFT stage Z data point grouping comprising a first data point in said first memory space X and a corresponding second data point in said second memory space Y, storing the results of an FFT operation upon said first data point at the memory address in said first memory space X from which said first data point was fetched and the results of an FFT operation upon said second data point at the memory address in said second memory space Y from which said second data point was fetched.
